(19) Europäisches Patentamt / European Patent Office / Office européen des brevets

(11) **EP 2 875 487 B1**

(12) **FASCICULE DE BREVET EUROPEEN**

(45) Date de publication et mention de la délivrance du brevet:
**30.11.2022 Bulletin 2022/48**

(21) Numéro de dépôt: **13702024.4**

(22) Date de dépôt: **29.01.2013**

(51) Classification Internationale des Brevets (IPC):
***G06T 5/00*** *(2006.01)*

(52) Classification Coopérative des Brevets (CPC):
**G06T 5/007;** G06T 2207/20208

(86) Numéro de dépôt international:
**PCT/EP2013/051677**

(87) Numéro de publication internationale:
**WO 2014/012680 (23.01.2014 Gazette 2014/04)**

(54) **PROCEDE ET DISPOSITIF DE CONVERSION D'UNE SEQUENCE D'IMAGE DONT LES VALEURS DE LUMINANCE APPARTIENNENT A UNE PLAGE DE VALEURS DE DYNAMIQUE ELEVEE**

VERFAHREN UND VORRICHTUNG ZUR UMWANDLUNG EINER BILDSEQUENZ MIT LEUCHTKRAFTWERTEN AUS EINER SPANNE VON WERTEN MIT GROSSEM DYNAMIKBEREICH

METHOD AND DEVICE FOR CONVERTING AN IMAGE SEQUENCE WHOSE LUMINANCE VALUES BELONG TO A SPAN OF VALUES WITH LARGE DYNAMIC RANGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2012 FR 1256925**

(43) Date de publication de la demande:
**27.05.2015 Bulletin 2015/22**

(73) Titulaire: **InterDigital VC Holdings, Inc. Wilmington, DE 19809 (US)**

(72) Inventeurs:
• **BOITARD, Ronan**
  **F-35576 Cesson Sevigne (FR)**
• **THOREAU, Dominique**
  **F-35576 Cesson Sevigne (FR)**
• **OLIVIER, Yannick**
  **F-35576 Cesson Sevigne (FR)**

(74) Mandataire: **Interdigital**
  **975, avenue des Champs Blancs**
  **35576 Cesson-Sévigné Cedex (FR)**

(56) Documents cités:
• **REINHARD E ET AL: "Photographic tone reproduction for digital images", ACM TRANSACTIONS ON GRAPHICS (TOG), ACM, US, vol. 21, no. 3, 2002, pages 267-276, XP007904044, ISSN: 0730-0301, DOI: 10.1145/566570.566575 cité dans la demande**
• **KANG S B ET AL: "High dynamic range video", ACM TRANSACTIONS ON GRAPHICS (TOG), ACM, US, vol. 22, no. 3, 27 juillet 2003 (2003-07-27), pages 319-325, XP002305364, ISSN: 0730-0301, DOI: 10.1145/882262.882270 cité dans la demande**
• **Shaun David Ramsey ET AL: "Adaptive Temporal Tone Mapping", Computer Graphics and Imaging 2004 (3), 2004, XP055061262, DOI: 10.1.1.104.4438 Extrait de l'Internet: URL:http://citeseerx.ist.psu.edu/viewdoc/download?doi=10.1.1.104.4438&rep=rep1&type=pdf [extrait le 2013-04-26] cité dans la demande**
• **MANTIUK RAFAL, DALY SCOTT, KEROFSKY LOUIS: "Display adaptive tone mapping", ACM SIGGRAPH 2008 PAPERS ON, SIGGRAPH '08, 2008, page 1, XP055043632, New York, New York, USA DOI: 10.1145/1399504.1360667 ISBN: 978-1-45-030112-1 cité dans la demande**

- **BENJAMIN GUTHIER ET AL: "<title>Flicker reduction in tone mapped high dynamic range video</title>", PROCEEDINGS OF SPIE, vol. 7866, 23 janvier 2011 (2011-01-23), page 78660C, XP055061689, ISSN: 0277-786X, DOI: 10.1117/12.872449**
- **PARDO A ET AL: "Visualization of high dynamic range images", IEEE TRANSACTIONS ON IMAGE PROCESSING, IEEE SERVICE CENTER, PISCATAWAY, NJ, US, vol. 12, no. 6, 2003, pages 639-647, XP011097523, ISSN: 1057-7149, DOI: 10.1109/TIP.2003.812373**
- **REINHARD E ET AL: "Image display algorithms for high- And low-dynamic-range display devices", JOURNAL OF THE SOCIETY FOR INFORMATION DISPLAY - SID, SOCIETY FOR INFORMATION DISPLAY, US, vol. 15, no. 12, 2007, pages 997-1014, XP002535223, ISSN: 1071-0922**

**Description**

## 1. Domaine de l'invention

L'invention se rapporte au domaine général de la conversion de dynamique d'une séquence d'image.

L'invention concerne plus particulièrement un dispositif et un procédé de conversion d'une séquence d'image originale dont les valeurs de luminance appartiennent à une plage de valeur de dynamique donnée vers une séquence d'image dont les valeurs de luminance appartiennent à une plage de valeur de dynamique moins élevée que celle de la séquence d'image originale.

## 2. Etat de l'art

Il est connu d'utiliser des opérateurs (*Tone Mapping Operators* en anglais ou encore *Tone Reproducers*, en abrégé TMO) pour convertir la dynamique d'une image originale acquise par une caméra de dynamique importante (*world High Dynamic Range* en anglais) vers une image dont la dynamique est plus faible (*Low Dynamic Range* en anglais) et ce de manière à adapter la dynamique de la séquence d'image originale à celle d'un écran sur lequel est affichée cette séquence d'image. Si la séquence d'image originale adaptée est destinée à un système de visualisation, la composante de luminance de cette séquence d'image adaptée est alors quantifiée et encodée de manière à être compatible avec les standard de visualisation (BT 709, etc.). Dans ce cas, on ne parle pas de composante luminance mais habituellement de composante luma. La luminance quant à elle correspond à une unité physique exprimée en cd/m$^2$. L'invention s'applique tout autant à une composante de luminance qu'à une composante luma.

L'un de ces opérateurs TMO est celui mis au point par Reinhard qui est communément appelé opérateur PTR (Reinhard, E., Stark, M., Shirley, P., and Ferwerda, J., \Photographic tone reproduction for digital images," ACM Transactions on Graphics 21 (July 2002)).

Le principe de cet opérateur est de convertir une composante de luminance $L_W$ d'une image dite originale en une composante de luminance $L_d$ dite modifiée d'une image en utilisant une courbe de mise en correspondance de type sigmoïde donnée par l'équation (1) :

$$L_d = \frac{L_s}{1 + L_s} \cdot \left(1 + \frac{L_s}{L_{white}^2}\right) \qquad (1)$$

avec $L_{white}$ une valeur de luminance utilisée pour ignorer des zones à fortes valeurs de luminance, $L_d$ une matrice dont la taille est celle de l'image et comprenant les valeurs de la composante de luminance de l'image qui sont exprimées dans une plage de valeurs de dynamique moins élevée que celle de l'image originale et $L_s$ une matrice dont la taille est celle de l'image et qui comprend les valeurs d'une composante de luminance obtenue par l'équation (2) :

$$L_s = \frac{a}{k} \cdot L_w \qquad (2)$$

avec a une valeur d'exposition choisie, k, communément appelée clé, une indication subjective de l'ensemble de la brillance de l'image donnée par l'équation (3) :

$$k = exp\left(\frac{1}{N} \cdot \Sigma_{i=1}^{N} log\big(\delta + L_w(i)\big)\right) \quad (3)$$

avec N le nombre de pixels de l'image, $\delta$ une valeur qui évite toute singularité, et $L_w(i)$ la valeur de luminance d'un pixel de la composante de luminance $L_w$.

Les valeurs $a$ et $L_{white}$ sont deux paramètres de cet opérateur TMO qui sont habituellement fixés, par exemple, à 18% pour le paramètre $a$ et à la valeur de luminance maximale de l'image originale pour le paramètre $L_{white}$.

L'opérateur PTR procure des résultats satisfaisants pour la conversion de dynamique d'images fixes. Il n'en est pas de même lorsque la conversion porte sur des séquences d'image. En effet, si la clé k change d'une image à l'autre, la courbe de conversion (de forme sigmoïde) change aussi, ce qui induit des conversions différentes des valeurs de luminance pourtant similaires dans les images originales. Un effet de vacillement des images modifiée est alors visible (*flickering* en anglais).

Pour résoudre de problème de vacillement, il est connu de convertir les valeurs de luminance de chaque image d'une séquence d'image indépendamment des valeurs des autres images de cette séquence d'image et de choisir, pour chaque conversion d'une image, une clé en fonction des pixels de cette image et des pixels d'un nombre prédéterminé d'images qui précèdent temporellement l'image à convertir dans la séquence d'image (Kang, S. B., Uyttendaele, M., Winder, S., and Szeliski, R., \High dynamic range video," in [ ACM SIGGRAPH 2003 Papers on - SIGGRAPH '03 ], 319, ACM Press, New York, New York, USA (2003)).

Plus précisément, la clé est calculée à partir de l'équation (3) dans laquelle N est égal à la somme du nombre de pixels de l'image à convertir et des nombres de pixels des images qui la précèdent temporellement dans la séquence d'image.

Ce procédé de conversion lisse les variations abruptes des clés qui peuvent se produire au cours d'une séquence d'image. Il permet donc de réduire le vacillement pour des séquences d'image qui présentent de faibles variations de brillance.

Toutefois, pour des variations de brillance plus fortes, le procédé n'est plus aussi efficace car le lissage utilise des images où les conditions de brillance sont différentes de l'image traitées.

Il est également connu des procédés dans lesquels ce nombre d'images précédentes est adapté dynamiquement selon la clé de l'image courante et de celles des images précédentes (Ramsey, S., III, J. J., and Hansen, C., \Adaptive temporal tone mapping," Computer Graphics and Imaging- 2004 (3), 3{7 (2004).).

Il est aussi connu des procédés qui compare une image originale avec une réponse visuelle du système visuel humain (HVS) à une image dont les valeurs de luminance appartiennent à une dynamique adaptée à un écran (Mantiuk, R., Daly, S., and Kerofsky, L., \Display adaptive tone mapping," ACM Transactions on Graph-ics 27, 1 (Aug. 2008)) ce qui permet d'obtenir une image dont la perception visuelle sur cet écran est la moins distordue possible. Une minimisation d'une erreur résiduelle entre les résultats des réponses du système visuel humain est calculée au cours de ces procédés.

Cette minimisation aboutit à une courbe de conversion qui est linéaire par morceaux et calculés image par image. Ce procédé n'est donc pas adapté pour la conversion d'une séquence d'image car l'effet de vacillement précédemment énoncé se produit pour certaines séquences d'image.

Pour résoudre ce problème, il est connu d'appliquer un filtre passe-bas à la courbe de conversion par morceaux pour lisser cette courbe. Toutefois, la minimisation de la distorsion perceptuelle image par image est alors déformée, provoquant une perception sous-optimale des images de la séquence d'image ainsi modifiée.

Si ces opérateurs TMO de l'état de la technique procurent des solutions satisfaisantes pour la conversion de dynamique d'images fixes, ces opérateurs ne sont toutefois pas optimaux pour la conversion de dynamique de séquence d'image car ils introduisent des artéfacts dans les séquences d'image modifiées.

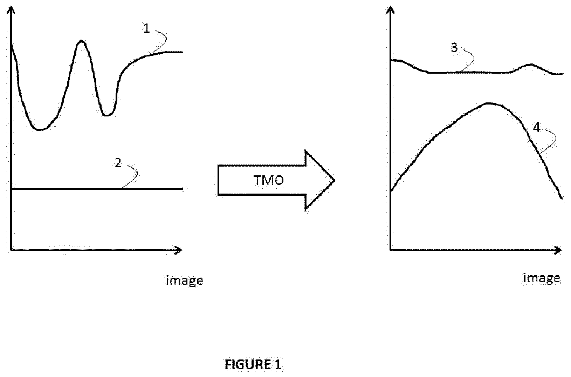

Bien que certains de ces opérateurs TMO réduisent le vacillement des images modifiées ou proposent encore des adaptations temporelles pour lisser les courbes de conversion, aucun ne propose de solution pour préserver une cohérence de la perception d'un objet présent dans les images d'une séquence d'image. Ainsi, la luminance d'un objet qui est exprimée dans une plage de valeur de dynamique élevée et qui est constante tout au long d'une séquence d'image est convertie en différentes valeurs de luminance qui sont exprimées dans une plage de valeurs de dynamique moins élevée lorsque ces opérateurs TMO sont utilisés. Ce problème est illustré à la figure 1. Sur la partie gauche est schématiquement représenté le maximum de luminance d'une séquence d'image originale dont les valeurs de luminance appartiennent à une plage de valeur de dynamique donnée (HDR), courbe 1, ainsi que la luminance d'un objet présent dans cette séquence d'image (courbe 2). On peut remarquer que la luminance de la séquence d'image varie fortement au cours de la séquence tandis que celle de l'objet est constante. Sur la partie de droite sont représentés le maximum des valeurs de luminance modifiée, courbe 3, ainsi que les valeurs de luminance modifiées de l'objet suite à l'application d'un opérateur TMO sur la séquence d'image originale. On constate sur cet exemple que la luminance constante de l'objet (courbe 2) correspond à différentes valeurs de luminance modifiées qui ont une forte variabilité (courbe 4) et que la forte variabilité du maximum de luminance de la séquence d'image (courbe 1) correspond à une valeur de luminance modifiée quasi constante (courbe 3). L'utilisation d'un opérateur TMO qui agit indépendamment sur chacune des images de la séquence d'image provoque donc un changement de la perception de l'objet présent dans la séquence d'image.

De plus, la brillance globale des images de la séquence d'image n'est pas préservée tout au long de la séquence d'image.

## 3. Résumé de l'invention

L'invention a pour but de pallier au moins un des inconvénients de l'art antérieur.

A cet effet, l'invention concerne un procédé et un dispositif de conversion d'une séquence d'image dite originale dont les valeurs de luminance appartiennent à une plage de valeur de dynamique donnée. Le procédé comportant une étape de conversion de dynamique image par image au cours de laquelle un opérateur de conversion de dynamique est appliqué à la composante de luminance de chaque image de la séquence d'image originale pour obtenir une composante de luminance modifiée dont les valeurs appartiennent à une plage de valeurs de dynamique moins élevée que celle de la séquence d'image originale, le procédé est caractérisé en ce qu'il comporte également une étape de correction de la dynamique au cours de laquelle la dynamique des valeurs de la composante de luminance ainsi modifiée est réduite d'une valeur calculée à partir d'une caractéristique globale de la séquence d'image originale.

## 4. Listes des figures

L'invention sera mieux comprise et illustrée au moyen d'exemples de modes de réalisation et de mise en œuvre avantageux, nullement limitatifs, en référence aux figures annexées sur lesquelles :

- la figure 1 représente schématiquement le changement de perception d'un objet dans une séquence d'image suite à l'application d'un opérateur TMO;
- la figure 2 représente un schéma fonctionnel d'un dispositif de conversion de séquence d'images qui met en œuvre un procédé de conversion de séquence d'images selon l'invention ; et
- la figure 3 représente schématiquement le changement de perception d'un objet dans une séquence d'image suite à l'application d'un opérateur TMO;

5. Description détaillée de l'invention

L'invention concerne un dispositif CONV de conversion d'une séquence d'image originale SIO dont les valeurs de luminance appartiennent à une plage de valeurs de dynamique donnée (HDR) vers une séquence d'image dont les valeurs de luminance appartiennent à une plage de valeurs de dynamique moins élevée (LDR) que celle de la séquence d'image originale SIO. On parle habituellement de correction de dynamique HDR vers LDR.

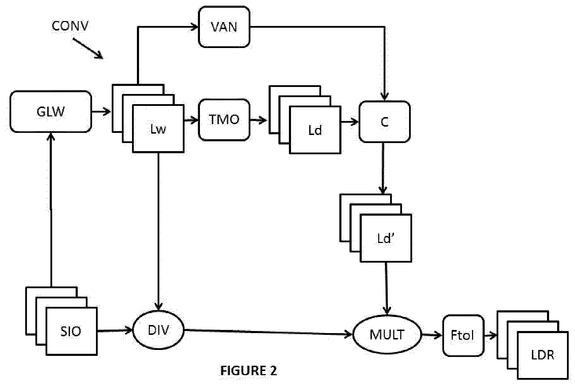

La figure 2 représente un schéma fonctionnel d'un tel dispositif de conversion de séquence d'image qui met en œuvre un procédé de conversion de séquence d'image selon l'invention.

Sur cette figure 2, les modules représentés sont des unités fonctionnelles, qui peuvent ou non correspondre à des unités physiquement distinguables. Par exemple, ces modules ou certains d'entre eux peuvent être regroupés dans un unique composant ou circuit, ou constituer des fonctionnalités d'un même logiciel. *A contrario,* certains modules peuvent éventuellement être composés d'entités physiques séparées. Le dispositif de conversion compatible avec l'invention est mis en œuvre selon une réalisation purement matérielle ("hardware" en anglais), par exemple sous forme d'un composant dédié (par exemple dans un ASIC ou FPGA ou VLSI) (respectivement « Application Specific Integrated Circuit » en anglais, signifiant « Circuit Intégré à vocation d'une application spécifique », « Field-Programmable Gate Array » en anglais, signifiant « Réseau de Portes Programmable In-Situ », « Very Large Scale Intégration » en anglais, signifiant « Intégration à très grande échelle ») ou de plusieurs composants électroniques intégrés dans un appareil ou encore sous forme d'un mélange d'éléments matériels et d'éléments logiciels (« software » en anglais).

Le dispositif CONV comporte un opérateur de conversion de dynamique TMO qui est appliqué à la composante de luminance Lw de chaque image de la séquence d'image originale SIO pour obtenir une image modifiée Ld dont les valeurs de luminance Ld(i) appartiennent à une plage de valeurs de dynamique LDR moins élevée que celle de l'image à convertir (HDR).

Dans le cas d'une séquence SIO d'image couleur, le dispositif CONV comporte des moyens GLW pour obtenir la composante de luminance Lw à partir de chaque image couleur de la séquence d'image SIO. Par exemple si une image de la séquence d'image SIO est exprimée dans une espace de couleur (R,G,B), l'image est transformée pour être exprimée dans l'espace de couleur (X,Y,Z) de manière à récupérer le canal Y de l'espace (X,Y,Z) qui forme la composante de luminance Lw. Il est largement connu de tels moyens de transformation d'espace de couleurs. D'autres exemples de moyens GLW peuvent être utilisés sans pour autant sortir du cadre de l'invention. Le dispositif CONV comporte également des moyens DIV et MULT dans le but de conserver une saturation constante ainsi que la nuance des couleurs. Ces moyens DIV sont configurés pour diviser les composantes de couleur R, G et B correspondantes à une image couleur de la séquence d'image SIO par la composante Lw et les moyens MULT sont configurés pour multiplier les composantes de couleur R, G et B ainsi modifiées par la composante de luminance modifiée Ld. Les trois composantes issues de cette multiplication sont alors exprimées dans des valeurs flottantes. Pour obtenir une image modifiée LDR, ces trois composantes issues de cette multiplication sont soumises à l'entrée de moyens Ftol du dispositif CONV et subissent une conversion de leurs valeurs vers des valeurs entières qui appartiennent à une plage de valeurs de la dynamique de l'écran sur lequel l'image couleur modifiée doit être affichée.

L'opérateur TMO peut-être tout opérateur TMO de l'état de la technique qui s'applique sur une image fixe ou indépendamment sur chacune des images d'une séquence d'image. L'opérateur PTR décrit dans la partie introductive peut par exemple être utilisé. Dans ce cas, la composante de luminance modifiée Ld est obtenue à partir de l'équation (1) donnée dans la partie introductive.

Selon l'invention, le dispositif de conversion comporte également des moyens de correction de la dynamique représentés sur le schéma par les modules C et des moyens VAN d'obtention de caractéristique de la composante de luminance Lw . Ces moyens sont configurés pour qu'au cours du procédé de conversion, la dynamique des valeurs de la composante de luminance ainsi modifiée Ld est réduite d'une valeur calculée à partir d'une caractéristique globale de la séquence d'image SIO.

Selon un mode de réalisation, la composante de luminance de dynamique réduite L'd est donnée par l'équation (5) :

$$L'_d = R.L_d \quad (5)$$

avec R une valeur réelle.

Ce mode de réalisation est particulièrement avantageux pour modifier la composante de luminance de séquence d'image représentant un fondu vers une couleur unique souvent du blanc ou du noir (*fading* en anglais).

En effet, un fondu partant d'une image $I_0^f$ d'une séquence d'image S et s'arrêtant à une image $I_{i+M}^f$ de la séquence d'image S peut s'exprimer par l'équation (6):

$$I_i^f = \alpha_i.I_0^f + I^b(1 - \alpha_i) \quad (6)$$

avec $I^b$ une image de la couleur unique finale du fondu (souvent blanche ou noire), $\alpha_i = \frac{i}{M}$ *avec* $0 \leq i \leq 1$ une valeur qui contrôle la durée du fondu, et M le nombre d'images entre la première image $I_0^f$ du fondu et la dernière image $I_{i+M}^f$ de ce fondu.

Selon une variante, le nombre M est défini pour que la durée du fondu de la séquence d'image modifiée soit égale à celle de la séquence d'image originale S.

Cette variante est particulièrement avantageuse car l'aspect visuel du fondu de la séquence d'image originale S est ainsi préservé.

Selon un mode de réalisation, la composante de luminance de dynamique réduite L'd est donnée par l'équation (7) :

$$L_d' = (x + (1-x).R)L_d \qquad (7)$$

avec R une valeur réelle et x un décalage de la valeur de réduction fixé par exemple par un utilisateur.

Cette variante permet de modifier la pente de la fonction de réduction lorsque la valeur de réduction est trop faible.

Selon un mode de réalisation, la caractéristique de la séquence d'image SIO exprime un niveau de brillance de la séquence d'image SIO.

Selon un mode de réalisation, le niveau de brillance de la séquence d'image SIO est donné par une clé kv qui est calculée à partir de l'équation (3) pour une valeur N égale à la somme des nombres de pixels de toutes les images de la séquence SIO.

Selon un mode de réalisation, la dynamique des valeurs de la composante de luminance modifiée est réduite d'une valeur calculée également à partir d'une caractéristique de l'image à convertir.

Selon un mode de réalisation, la caractéristique de l'image à convertir est le niveau de brillance de cette image.

Selon un mode de réalisation, ce niveau de brillance de cette image est donné par une clé kp qui est calculé à partir de l'équation (3) pour une valeur N égale au nombre de pixels de cette image.

Selon un mode de réalisation qui correspond au cas particulier où l'opérateur TMO est un opérateur PTR, la valeur R est donnée par l'équation (8) :

$$R = \frac{k_p}{k_p + k_v} \qquad (8)$$

Ce dernier mode de réalisation permet de préserver la perception d'un objet présent dans la séquence d'image SIO et d'assurer la cohérence temporelle de la brillance entre les images de la séquence d'images SIO.

Selon un mode de réalisation, la valeur R est donnée par l'équation (9) :

$$\frac{k_i^{HDR}.k_{i,max}^{LDR}}{k_{i,max}^{HDR}.k_i^{LDR}} \qquad (9)$$

avec $k_i^{HDR}$ la clé de la composante de luminance de l'image à convertir de la séquence d'image SIO, $k_{i,max}^{HDR}$ la clé maximale choisie parmi les clé des composantes de luminance des images originales de la séquence d'image

SIO, $k_i^{LDR}$ la clé de la composante de luminance modifiée Ld de l'image à convertir et $k_{i,max}^{LDR}$ la clé maximale choisie parmi les clés des composantes de luminance modifiées Ld issues de la séquence d'image SIO.

Selon un mode de réalisation, la valeur R est donnée par l'équation (9) :

$$\frac{k_i^{HDR}.k_{i,min}^{LDR}}{k_{i,min}^{HDR}.k_i^{LDR}}$$

avec $k_i^{HDR}$ la clé de la composante de luminance de l'image à convertir de la séquence d'image SIO, $k_{i,min}^{HDR}$ la clé minimale choisie parmi les clés des composantes de luminance des images originales de la séquence d'image SIO, $k_i^{LDR}$ la clé de la composante de luminance modifiée Ld de l'image à convertir et $k_{i,min}^{LDR}$ la clé minimale choisie parmi les clés des composantes de luminance modifiées Ld issues de la séquence d'image SIO.

Ces deux derniers modes de réalisation sont particulièrement avantageux car tout type d'opérateur TMO qui s'applique image par image peut être utilisé et parce qu'il assure la cohérence temporelle de la brillance entre les images de la séquence d'images SIO. De plus, le premier (respectivement le deuxième) de ces deux derniers modes de réalisation est particulièrement avantageux pour modifier la composante de luminance d'une séquence d'images représentant un fondu vers la couleur noire (respectivement blanche) lorsque la composante de luminance de dynamique réduite L'd est donnée par l'équation (5).

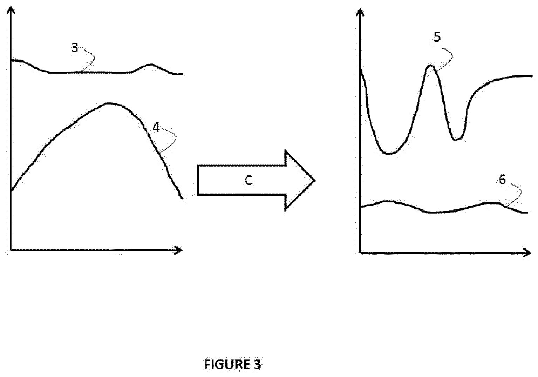

La figure 3 représente un exemple de résultats procurés par l'invention.

Sur la partie gauche sont représentées les courbes de la partie de droite de la figure 1. Sur la partie de droite sont représentés le maximum des valeurs des composantes L'd issues de la séquence d'image (courbe 5) une fois corrigées par les moyens C ainsi que les valeurs de luminance corrigées de l'objet (courbe 6). On peut noter que les variations des valeurs L'd(i) de l'objet ont été réduites permettant ainsi une stabilité de la perception de l'objet tout au long de la séquence d'image SIO. De plus, les variations du maximum des valeurs de luminance L'd(i) sont comparables à celles de l'image originale malgré la réduction de la dynamique des plages de valeurs. Ceci permet de préserver la cohérence de la brillance tout au long de la séquence d'image.

## Revendications

1. Procédé de conversion d'une séquence d'image dite originale (SIO) dont les valeurs de luminance appartiennent à une plage de valeur de dynamique donnée, ledit procédé comportant une étape de conversion de dynamique image par image au cours de laquelle un opérateur de conversion de dynamique (TMO) est appliqué à la composante de luminance (Lw) de chaque image de la séquence d'image originale (SIO) pour obtenir une composante de luminance modifiée Ld dont les valeurs appartiennent à une plage de valeurs de dynamique moins élevée que celle de la séquence d'image originale (SIO), **caractérisé en ce qu'**il comporte également une étape de correction de la dynamique au cours de laquelle la dynamique des valeurs de la composante de luminance ainsi modifiée (Ld) est réduite d'une valeur (R) calculée à partir d'une caractéristique globale de la séquence d'image originale.

2. Procédé selon la revendication 1, dans lequel la composante de luminance de dynamique réduite $L'_d$ est donnée par:

$$L'_d = R.L_d$$

avec R une valeur réelle.

3. Procédé selon la revendication 1, dans lequel la composante de luminance de dynamique réduite $L'_d$ est donnée par:

$$L'_d = (x + (1-x).R)L_d$$

avec R une valeur réelle et x un décalage de la valeur de réduction fixé par exemple par un utilisateur.

4. Procédé selon la revendication 2 ou 3, dans lequel la caractéristique de la séquence d'image originale exprime un niveau de brillance de la séquence d'image originale.

5. Procédé selon la revendication 1, dans lequel la dynamique des valeurs de la composante de luminance modifiée est réduite d'une valeur calculée également à partir d'une caractéristique de l'image à convertir.

6. Procédé selon la revendication 4, dans lequel la caractéristique de l'image à convertir est le niveau de brillance de cette image.

7. Procédé selon l'une des revendications 2 à 6, dans lequel l'opérateur de conversion de dynamique (TMO) est un opérateur de Reinhard, la valeur R est donnée par:

$$R = \frac{k_p}{k_p + k_v}$$

avec $k_p$ une valeur, dit clé, qui est calculée à partir des pixels d'une image et $k_v$ une valeur, dit clé, qui est calculée à partir de tous les pixels de toutes les images de la séquence d'image originale.

8. Procédé selon l'une des revendications 2 à 6, dans lequel la valeur R est donnée par:

$$\frac{k_i^{HDR}.k_{i,max}^{LDR}}{k_{i,max}^{HDR}.k_i^{LDR}}$$

avec $k_i^{HDR}$ une valeur, dite clé, qui est calculée à partir de la composante de luminance de l'image à convertir de la séquence d'image originale, $k_{i,max}^{HDR}$ une valeur maximale choisie parmi les clés des composantes de luminance des images originales de la séquence d'image originale, $k_i^{LDR}$ une valeur, dite clé, qui est calculée à partir de la composante de luminance modifiée Ld de l'image à convertir et $k_{i,max}^{LDR}$ une valeur maximale choisie parmi les clés des composantes de luminance modifiées Ld issues de la séquence d'image originale.

9. Procédé selon l'une des revendications 2 à 6, dans lequel la valeur R est donnée par:

$$\frac{k_i^{HDR} \cdot k_{i,min}^{LDR}}{k_{i,min}^{HDR} \cdot k_i^{LDR}}$$

avec $k_i^{HDR}$ une valeur, dite clé, qui est calculée à partir de la composante de luminance de l'image à convertir de la séquence d'image originale, $k_{i,min}^{HDR}$ une valeur minimale choisie parmi les clés des composantes de luminance des images originales de la séquence d'image originale, $k_i^{LDR}$ une valeur, dite clé, qui est calculée à partir de la composante de luminance modifiée Ld de l'image à convertir et $k_{i,min}^{LDR}$ une valeur minimale choisie parmi les clés des composantes de luminance modifiées Ld issues de la séquence d'image originale.

10. Dispositif de conversion d'une séquence d'image dite originale (SIO) dont les valeurs de luminance appartiennent à une plage de valeur de dynamique donnée, ledit dispositif comportant un opérateur de conversion de dynamique (TMO) prévu pour être appliqué à la composante de luminance (Lw) de chaque image de la séquence d'image originale (SIO) pour obtenir une composante de luminance modifiée (Ld) dont les valeurs appartiennent à une plage de valeurs de dynamique moins élevée que celle de la séquence d'image originale (SIO), **caractérisé en ce qu'**il comporte également des moyens pour corriger la dynamique des valeurs de la composante de luminance ainsi modifiée (Ld) de manière à la réduire d'une valeur (R) calculée à partir d'une caractéristique globale de la séquence d'image originale.

11. Dispositif selon la revendication 10, dans lequel la composante de luminance de dynamique réduite $L_d'$ est donnée par:

$$L_d' = R . L_d$$

avec R une valeur réelle.

12. Dispositif selon la revendication 10, dans lequel la composante de luminance de dynamique réduite $L_d'$ est donnée par:

$$L_d' = (x + (1 - x) . R) L_d$$

avec R une valeur réelle et x un décalage de la valeur de réduction fixé par exemple par un utilisateur.

13. Dispositif selon la revendication 11 ou 12, dans lequel la caractéristique de la séquence d'image originale exprime un niveau de brillance de la séquence d'image originale.

14. Dispositif selon la revendication 10, dans lequel la dynamique des valeurs de la composante de luminance modifiée est réduite d'une valeur calculée également à partir d'une caractéristique de l'image à convertir.

15. Dispositif selon la revendication 13, dans lequel la caractéristique de l'image à convertir est le niveau de brillance de cette image.

**Patentansprüche**

1. Verfahren zur Umwandlung einer sogenannten originalen Bildsequenz (SIO) mit Leuchtkraftwerten aus einer Spanne von Werten eines bestimmten Dynamikbereichs, wobei das besagte Verfahren einen Schritt zur Umwandlung eines Dynamikbereichs Bild für Bild umfasst, bei dem ein Operator zur Umwandlung eines Dynamikbereichs (TMO) auf die Leuchtkraftkomponente (Lw) jedes Bildes der originalen Bildsequenz (SIO) angewandt wird, um eine veränderte Leuchtkraftkomponente Ld mit Werten aus einer Spanne von Werten eines Dynamikbereichs zu erhalten, der geringer als jener der originalen Bildsequenz (SIO) ist, **dadurch gekennzeichnet, dass** das Verfahren ebenfalls einen Schritt zur Korrektur des Dynamikbereichs umfasst, bei dem der Dynamikbereich der Werte der so veränderten Leuchtkraftkomponente (Ld) um einen Wert (R) reduziert wird, der anhand eines globalen Merkmals der originalen Bildsequenz berechnet wird.

2. Verfahren nach Anspruch 1, in welchem die Leuchtkraftkomponente eines reduzierten Dynamikbereichs $L_d'$ bestimmt wird durch:

$$L_d' = R.L_d$$

wobei R ein tatsächlicher Wert ist.

3. Verfahren nach Anspruch 1, in welchem die Leuchtkraftkomponente eines reduzierten Dynamikbereichs $L_d'$ bestimmt wird durch:

$$L_d' = (x + (1 - x).R)L_d$$

wobei R ein tatsächlicher Wert und x eine Verschiebung des Reduktionswerts, die beispielsweise von einem Nutzer festgelegt wurde, ist.

4. Verfahren nach Anspruch 2 oder 3, in welchem das Merkmal der originalen Bildsequenz eine Helligkeitsstufe der originalen Bildsequenz ausdrückt.

5. Verfahren nach Anspruch 1, in welchem der Dynamikbereich der Werte der veränderten Leuchtkraftkomponente um einen Wert reduziert wird, der ebenfalls anhand eines Merkmals des umzuwandelnden Bildes berechnet wird.

6. Verfahren nach Anspruch 4, in welchem das Merkmal des umzuwandelnden Bildes die Helligkeitsstufe dieses Bildes ist.

7. Verfahren nach einem der Ansprüche 2 bis 6, in welchem der Operator zur Umwandlung eines Dynamikbereichs (TMO) ein Reinhard-Operator ist, der Wert R bestimmt wird durch:

$$R = \frac{k_p}{k_p + k_v}$$

wobei $k_p$ ein sogenannter Schlüsselwert ist, der anhand der Pixel eines Bildes berechnet wird, und $k_v$ ein sogenannter Schlüsselwert ist, der anhand aller Pixel von allen Bildern der originalen Bildsequenz berechnet wird.

8. Verfahren nach einem der Ansprüche 2 bis 6, in welchem der Wert R bestimmt wird durch:

$$\frac{k_i^{HDR} \cdot k_{i,max}^{LDR}}{k_{i,max}^{HDR} \cdot k_i^{LDR}}$$

wobei $k_i^{HDR}$ ein sogenannter Schlüsselwert ist, der anhand der Leuchtkraftkomponente des umzuwandelnden Bildes der originalen Bildsequenz berechnet wird, $k_{i,max}^{HDR}$ ein aus den Schlüsselwerten der Leuchtkraftkomponenten der Originalbilder der originalen Bildsequenz ausgewählter Maximalwert ist, $k_i^{LDR}$ ein sogenannter Schlüsselwert ist, der anhand der veränderten Leuchtkraftkomponente Ld des umzuwandelnden Bildes berechnet wird, und $k_{i,max}^{LDR}$ ein aus den Schlüsselwerten der veränderten Leuchtkraftkomponenten Ld, die aus der originalen Bildsequenz hervorgegangen sind, ausgewählter Maximalwert ist.

9. Verfahren nach einem der Ansprüche 2 bis 6, in welchem der Wert R bestimmt wird durch:

$$\frac{k_i^{HDR} \cdot k_{i,min}^{LDR}}{k_{i,min}^{HDR} \cdot k_i^{LDR}}$$

wobei $k_i^{HDR}$ ein sogenannter Schlüsselwert ist, der anhand der Leuchtkraftkomponente des umzuwandelnden Bildes der originalen Bildsequenz berechnet wird, $k_{i,min}^{HDR}$ ein aus den Schlüsselwerten der Leuchtkraftkomponenten der Originalbilder der originalen Bildsequenz ausgewählter Mindestwert ist, $k_i^{LDR}$ ein sogenannter Schlüsselwert ist, der anhand der veränderten Leuchtkraftkomponente Ld des umzuwandelnden Bildes berechnet wird, und $k_{i,min}^{LDR}$ ein aus den Schlüsselwerten der veränderten Leuchtkraftkomponenten Ld, die aus der originalen Bildsequenz hervorgegangen sind, ausgewählter Mindestwert ist.

10. Vorrichtung zur Umwandlung einer sogenannten originalen Bildsequenz (SIO) mit Leuchtkraftwerten aus einer Spanne von Werten eines bestimmten Dynamikbereichs, wobei die besagte Vorrichtung einen Operator zur Umwandlung eines Dynamikbereichs (TMO) umfasst, der vorgesehen ist, um auf die Leuchtkraftkomponente (Lw) jedes Bildes der originalen Bildsequenz (SIO)angewendet zu werden, um eine veränderte Leuchtkraftkomponente (Ld) mit Werten aus einer Spanne von Werten eines Dynamikbereichs zu erhalten, der geringer als jener der originalen Bildsequenz (SIO) ist, **dadurch gekennzeichnet, dass** die Vorrichtung ebenfalls Mittel zur Korrektur des Dynamikbereichs der Werte der so veränderten Leuchtkraftkomponente (Ld) umfasst, dergestalt, dass er um einen Wert (R) reduziert wird, der anhand eines globalen Merkmals der originalen Bildsequenz berechnet wird.

11. Vorrichtung nach Anspruch 10, in welcher die Leuchtkraftkomponente eines reduzierten Dynamikbereichs $L'_d$ bestimmt wird durch:

$$L'_d = R.L_d$$

wobei R ein tatsächlicher Wert ist.

12. Vorrichtung nach Anspruch 10, in welcher die Leuchtkraftkomponente eines reduzierten Dynamikbereichs $L'_d$ bestimmt wird durch:

$$L'_d = (x + (1 - x).R)L_d$$

wobei R ein tatsächlicher Wert und x eine Verschiebung des Reduktionswerts, die beispielsweise von einem Nutzer festgelegt wurde, ist.

**13.** Vorrichtung nach Anspruch 11 oder 12, in welcher das Merkmal der originalen Bildsequenz eine Helligkeitsstufe der originalen Bildsequenz ausdrückt.

**14.** Vorrichtung nach Anspruch 10, in welcher der Dynamikbereich der Werte der veränderten Leuchtkraftkomponente um einen Wert reduziert wird, der ebenfalls anhand eines Merkmals des umzuwandelnden Bildes berechnet wird.

**15.** Vorrichtung nach Anspruch 13, in welcher das Merkmal des umzuwandelnden Bildes die Helligkeitsstufe dieses Bildes ist.

## Claims

**1.** Method for converting an original image sequence (SIO) whose luminance values belong to a given dynamic range, said method comprising a step of image-by-image dynamic range conversion during which a dynamic range conversion operator (TMO) is applied to the luminance component (Lw) of each image of the original image sequence (SIO) to obtain a modified luminance component Ld whose values belong to a lower dynamic range than that of the original image sequence (SIO), **characterised in that** it also comprises a step of correction of the dynamic range during which the dynamic range of the values of the luminance component thus modified (Ld) is reduced by a value (R) calculated from a global characteristic of the original image sequence.

**2.** Method according to claim 1, wherein the reduced dynamic range luminance component $L'_d$ is given by:

$$L'_d = R.L_d$$

where R is a real value.

**3.** Method according to claim 1, wherein the reduced dynamic range luminance component $L'_d$ is given by:

$$L'_d = (x + (1-x).R)L_d$$

where R is a real value and x is an offset in the reduction value fixed for example by a user.

**4.** Method according to claim 2 or 3, wherein the characteristic of the original image sequence expresses a level of brightness of the original image sequence.

**5.** Method according to claim 1, wherein the dynamic range of the values of the modified luminance component is reduced by a value also calculated from a characteristic of the image to be converted.

**6.** Method according to claim 4, wherein the characteristic of the image to be converted is the level of brightness of this image.

**7.** Method according to one of claims 2 to 6, wherein the dynamic range conversion operator (TMO) is a Reinhard operator, the value R is given by:

$$R = \frac{k_p}{k_p + k_v}$$

where $k_p$ is a value, called a key, which is calculated from the pixels of an image and $k_v$ is a value, called a key, which is calculated from all the pixels of all the images of the original image sequence.

**8.** Method according to one of claims 2 to 6, wherein the value R is given by:

$$\frac{k_i^{HDR}.k_{i,max}^{LDR}}{k_{i,max}^{HDR}.k_i^{LDR}}$$

where $k_i^{HDR}$ is a value, called a key, which is calculated from the luminance component of the image to be converted of the original image sequence, $k_{i,max}^{HDR}$ is a maximum value chosen from among the keys of the luminance components of the original images of the original image sequence, $k_i^{LDR}$ is a value, called a key, which is calculated from the modified luminance component Ld of the image to be converted and $k_{i,max}^{LDR}$ is a maximum value chosen from among the keys of the modified luminance components Ld originating from the original image sequence.

**9.** Method according to one of claims 2 to 6, wherein the value R is given by:

$$\frac{k_i^{HDR}.k_{i,min}^{LDR}}{k_{i,min}^{HDR}.k_i^{LDR}}$$

where $k_i^{HDR}$ is a value, called a key, which is calculated from the luminance component of the image to be converted of the original image sequence, $k_{i,min}^{HDR}$ is a minimum value chosen from among the keys of the luminance components of the original images of the original image sequence, $k_i^{LDR}$ is a value, called a key, which is calculated from the modified luminance component *Ld* of the image to be converted and $k_{i,min}^{LDR}$ is a minimum value chosen from among the keys of the modified luminance components *Ld* originating from the original image sequence.

10. Device for converting an original image sequence (SIO) whose luminance values belong to a given dynamic range, said device comprising a dynamic range conversion operator (TMO) intended to be applied to the luminance component (Lw) of each image of the original image sequence (SIO) to obtain a modified luminance component (Ld) whose values belong to a lower dynamic range than that of the original image sequence (SIO), **characterised in that** it also comprises means for correcting the dynamic range of the values of the luminance component thus modified (Ld) so as to reduce it by a value (R) calculated from a global characteristic of the original image sequence.

11. Device according to claim 10, wherein the reduced dynamic range luminance component $L_d'$ is given by:

$$L_d' = R.L_d$$

where R is a real value.

12. Device according to claim 10, wherein the reduced dynamic range luminance component $L_d'$ is given by:

$$L_d' = (x + (1-x).R)L_d$$

where R is a real value and x is an offset in the reduction value fixed for example by a user.

13. Device according to claim 11 or 12, wherein the characteristic of the original image sequence expresses a level of brightness of the original image sequence.

14. Device according to claim 10, wherein the dynamic range of the values of the modified luminance component is reduced by a value also calculated from a characteristic of the image to be converted.

15. Device according to claim 13, wherein the characteristic of the image to be converted is the level of brightness of this image.

**FIGURE 1**

**FIGURE 2**

FIGURE 3

## RÉFÉRENCES CITÉES DANS LA DESCRIPTION

**Littérature non-brevet citée dans la description**

- **REINHARD, E. ; STARK, M. ; SHIRLEY, P. ; FER-WERDA, J.** Photographic tone reproduction for digital images. *ACM Transactions on Graphics 21,* Juillet 2002
- High dynamic range video. **KANG, S. B. ; UYTTEN-DAELE, M. ; WINDER, S. ; SZELISKI, R.** ACM SIG-GRAPH 2003 Papers on - SIGGRAPH '03. ACM Press, 2003, vol. 319
- **RAMSEY, S. ; III, J. J. ; HANSEN, C.** Adaptive temporal tone mapping. *Computer Graphics and Imaging- 2004,* 2004, vol. 3 (3
- **MANTIUK, R. ; DALY, S. ; KEROFSKY, L.** Display adaptive tone mapping. *ACM Transactions on Graph-ics,* Août 2008, vol. 27, 1